# EUROPEAN PATENT APPLICATION

(11) **EP 3 437 916 A1**
(43) Date of publication of application: **06.02.2019**
(21) Application number: 17775810.9
(22) Date of filing: 29.03.2017
(51) Int. Cl.: B60L 8/00, B60L 11/18, B60K 16/00, F03D 9/25, F16H 1/14

(54) **ELECTRIC VEHICLE EQUIPPED WITH WIND POWER GENERATOR**

(30) Priority: 30.03.2016 KR 20160038032
(71) Applicant: Yeo, Chi Hong, Anyang-si, Gyeonggi-do 14016 (KR)
(72) Inventor: Yeo, Chi Hong, Anyang-si, Gyeonggi-do 14016 (KR)
(74) Representative: BRP Renaud & Partner mbB Rechtsanwälte Patentanwälte Steuerberater
(86) International application number: PCT/KR2017/003393
(87) International publication number: WO 2017/171386

(57) **Abstract**

The present invention relates to an electric vehicle equipped with a wind power generator comprising fans having spiral suction blades. The wind power generator includes a spiral suction fan with blades having the same height and an electric fan-type spiral suction fan provided inside a funnel-shaped cylindrical protective cover to which the Venturi principle is applied, the funnel-shaped cylindrical protective cover being capable of increasing wind suctioned from outside and converting the wind into a wind speed. The electric fan-type spiral suction fan and the spiral suction fan with blades having the same height are connected to a power generator so as to generate electricity. The generated electricity is stored in a storage battery first and is then used to drive the vehicle in connection with to an electric motor, and the remaining electricity is supplied to an electric power company so as to supplement electricity at home or an industrial complex.

## Description

### [Technical Field]

The present invention relates to a wind power electric vehicle equipped with a wind power generator, including a spiral suction fan with blades having the same height and an electric fan-type spiral suction fan, which are provided inside a funnel-shaped cylindrical protective cover to which the Venturi principle is applied. More specifically, the present invention relates to an electric vehicle equipped with a wind power generator which has a wind power generator mounted at a position of an internal combustion engine, which is a part of the hood of an existing vehicle, to generate electricity using wind continuously coming from the outside and charge a storage battery such that the vehicle can be driven with the charged battery and the remaining electricity can be supplied to an electric power company so as to make up for insufficient power at homes or in an industrial complex and conserve remaining resources on the planet.

### [Background Art]

Conventional vehicles are divided into vehicles powered by an internal combustion engine, supplied with fossil fuels such as gasoline, diesel and LPG or biofuels which are vegetable fuels from the outside, electric vehicles driven by being charged with electricity from the outside, wind power vehicles using wind power, and solar-powered electric vehicles using solar energy.

Such vehicles need to be supplied with a fossil fuel or electricity from the outside to operate, thereby increasing the economic burden due to excessive purchase and maintenance costs of the vehicles. Emission of exhaust gas or carbon dioxide from the vehicles worsens environmental pollution, which affects health, and increase of imported fossil fuels has a serious impact on national development.

In order to solve the above problems, the present invention provides an electric vehicle equipped with a wind power generator which uses unlimited wind energy present in nature and a funnel-shaped wind power generator to which the Venturi principle is applied to generate electricity to drive the vehicle by charging a battery with the generated electricity, thereby lowering the purchase and maintenance costs of the vehicle and eliminating emission of exhaust gases or carbon dioxide.

In the current traffic management system, vehicles must repeatedly operate and stop by traffic lights, and therefore it is impossible to operate the vehicle without supplying the vehicle with a fuel or electricity from the outside.

In contrast, an electric vehicle equipped with a wind power generator can suck wind continuously from the outside if the following conditions are satisfied.

The conditions are as follows:
First, a traffic system using a semi-three-dimensional intersection and a semi-underground U-turn lane configured by half-structures of dichotomy that enables operation various types of functions in one structure nonstop, for which the applicant filed an application, is applied.
Second, if a nonstop traffic system using a semi-three-dimensional intersection of dichotomy configured with one traffic system by combining the semi-three-dimensional intersection and the semi-underground U-turn lane, and a traffic system employing the same, for which the applicant filed an application, are applied, an electric vehicle equipped with a wind power generator capable of self-generating electricity for driving of the vehicle by allowing the wind power generator constituted by spiral suction fans to continuously take in the wind can be realized.

### [Patent Documents]

1. Korean Patent Application No.: 10-2007-109822, 10-2013-0036203
   Korean Patent Application No.: 10-2007-109362, 10-2013-0036204
2. Korean Patent Application No.: 10-2012-0096877, 10-2015-0159513
   US Patent No.: US 8,500,359 B2
   China Patent No.: CN 102239296 B
   Japanese Patent Application No.: 2011-539445 (June 02, 2011)
   European Patent Application No.: 09830572.5 (July 01, 2011)
   Indian Patent Application No.: 2766/KOLNP/2011 (July 01, 2011)

### [Disclosure]

### [Technical Problem]

The above-described vehicles according to the conventional art are configured to operate only when they are supplied fossil fuels such as gasoline, diesel and LPG, biofuels or electricity from the outside as energy for driving the vehicle. Therefore, economic burden is increasing due to excessive purchase and maintenance costs of a vehicle. In addition, exhaust gases and carbon dioxide emitted from vehicles using fossil fuels are main causes of environmental pollution including rapid weather changes that the earth is facing, and have serious impacts on health.

### [Technical Solution]

In accordance with one aspect of the present invention made in view of the above problems, provided is an electric vehicle equipped with a wind power generator, which is not supplied with a fossil fuel or electricity from the outside as energy for driving the vehicle, wherein the wind power generator includes a funnel-shaped cylindrical protective cover configured to increase the wind suctioned from the outside and to convert the same into wind speed by applying the Venturi principle, an electric fan-type spiral suction fan, and a spiral suction fan having blades with the same height - wherein the electric fan-type spiral suction fan and the spiral suction fan having blades with the same height are installed inside the protective cover and are configured to rotate at a high speed to generate and store electricity in a storage battery so as to drive the vehicle with the stored electricity.

### [Advantageous Effects]

Electricity generated by an electric vehicle equipped with a wind power generator is stored in a storage battery first and used to drive the vehicle. The remaining electricity is supplied to a power company so as to be supplied to a home or an industrial complex. Thereby, with the electric vehicle, income can be created for individuals and the government can improve people's lives by reducing the tax burden on the people because the need for expensive power transmission facilities or power generation facilities is eliminated. Accidents caused by natural disasters can be prevented. Therefore, the present invention allows humanity and the earth to coexist.

According to another embodiment of the present invention, since electricity is generated using wind power, which is an unlimited natural resource, the present invention can replace thermal power generation or nuclear power generation and eliminate the need for an internal combustion engine. Therefore, the cost of purchasing a vehicle can be reduced, and expenses can be reduced as unnecessary fuels are not used. In addition, as exhaust gases are not emitted, air pollution can be prevented. Further, the remaining fossil fuels on the earth may be reserved and be used in other fields. Therefore, mankind can lead a better future and lead a rich life.

### [Description of Drawings]

FIG. 1 is a plan view of an electric vehicle equipped with a wind power generator.
FIG. 2 is a side view of an electric vehicle equipped with the wind power generator.
FIG. 3 is a side view of the wind power generator.
FIG. 4 is a cross-sectional view of the generator arrangement, a bevel bobbin and a bevel belt, taken along line A-A.
FIG. 5 is a cross-sectional view of a honeycomb protection net, taken along line B-B.
FIG. 6 is a cross-sectional view of a front fixed support of an electric fan-type spiral suction fan, taken along line C-C.
FIG. 7 is a cross-sectional view of the front of the electric fan-type spiral suction fan, taken along line D-D.
FIG. 8 is a cross-sectional view of the middle of the electric fan-type spiral suction fan, taken along line E-E.
FIG. 9 is a cross-sectional view of the end of the electric fan-type spiral suction fan, taken along line F-F.
FIG. 10 is a cross-sectional view of a rear fixed support of the electric fan-type spiral suction fan, taken along line G-G.
FIG. 11 is a cross-sectional view showing a double cross section of the electric fan-type spiral suction fan and a spiral suction fan with blades having the same height connected to each other, taken along line H-H.
FIG. 12 is a cross-sectional view of the spiral suction fan with blades having the same height, taken along line I-I.
FIG. 13 is a cross-sectional view of a part through which sucked wind is discharged, taken along line J-J.

### [Reference Numerals for Main Parts in the Drawings]

100: Wind power generator
101: Funnel-shaped wind power generator protective cover
102: Honeycomb protection net
103: Electric fan-type spiral suction fan
104: Spiral suction fan with blades having the same height
105: Front fixed support of electric fan-type spiral suction fan
106: Rear fixed support of electric fan-type spiral suction fan
107: Generator
108: Bevel bobbin
109: Bevel belt
110: Bearing
111: Bearing fixing member
112: Bevel gear
113: Fixing bolt for fixing funnel-shaped cylindrical protective cover 101
200: Storage battery
300: Electric drive motor
400: Plug for supplying electricity to a power company

### [Best Mode]

Hereinafter, preferred embodiments of the present invention configured to achieve the above objects will be described in detail with reference to the accompanying drawings.

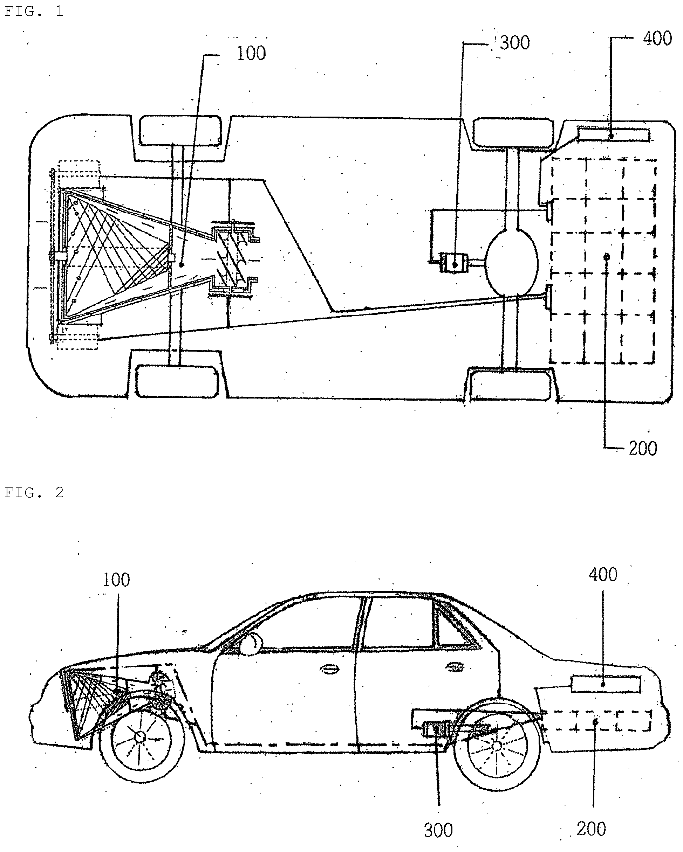

FIG. 1 is a plan view of an electric vehicle equipped with the wind power generator to which the technique of the present invention is applied.
FIG. 2 is a side view of an electric vehicle equipped with the wind power generator to which the technique of the present invention is applied.

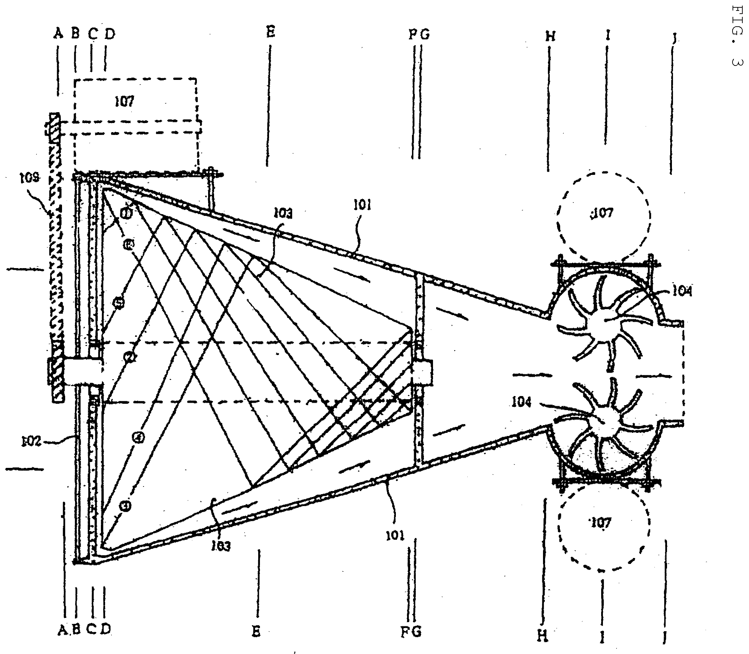

FIG. 3 is a side view of the wind power generator to which the technique of the present invention is applied.

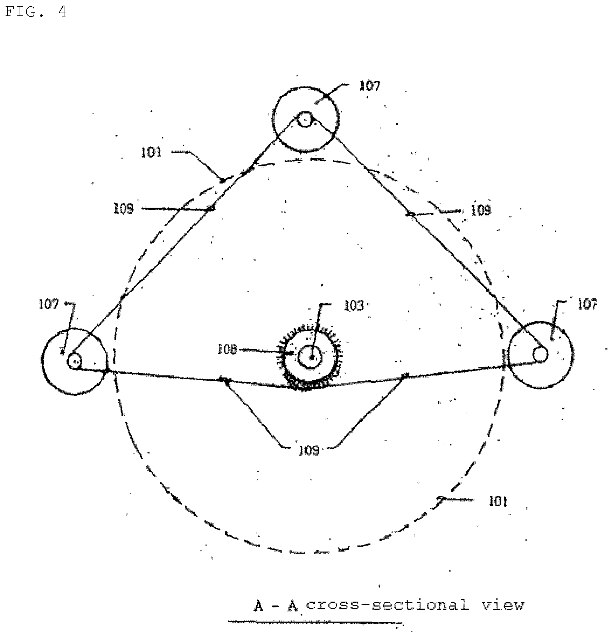

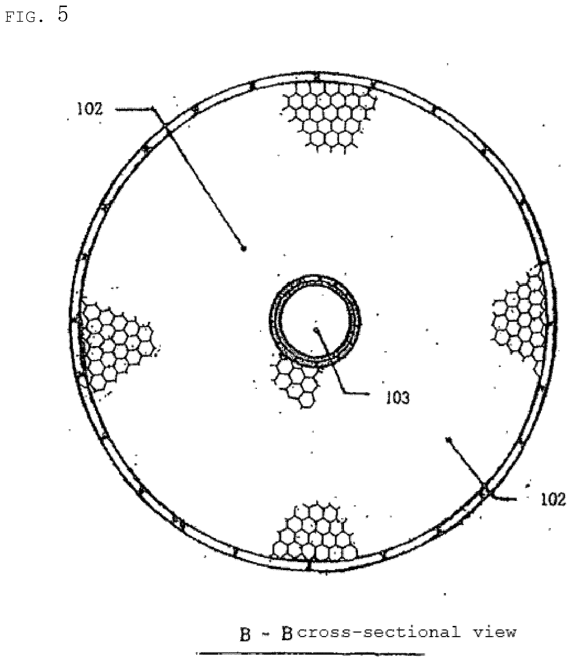

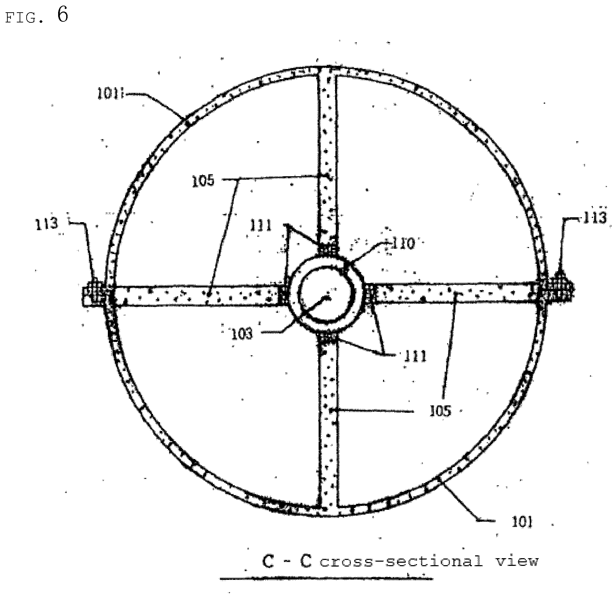

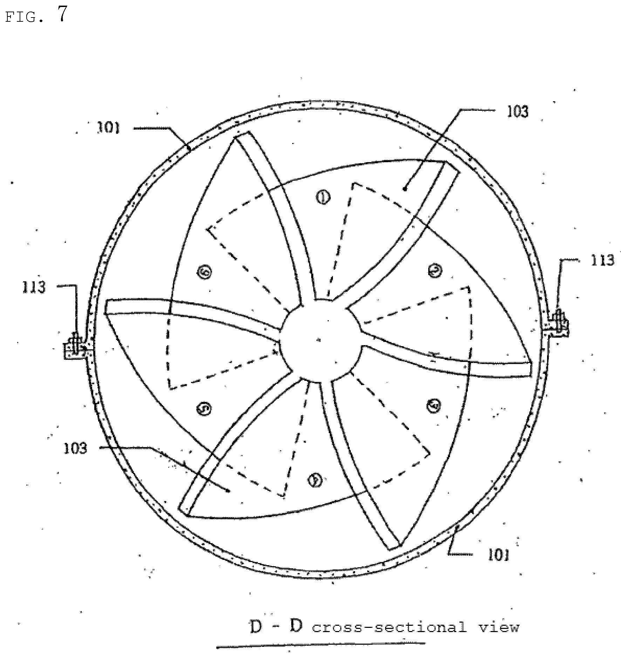

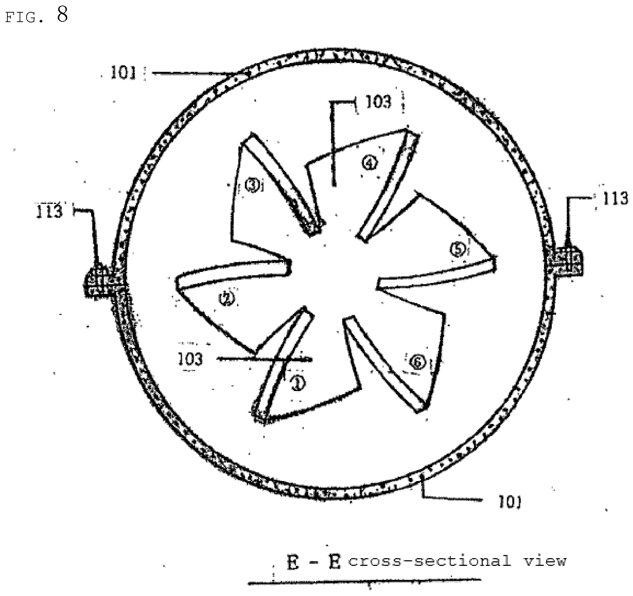

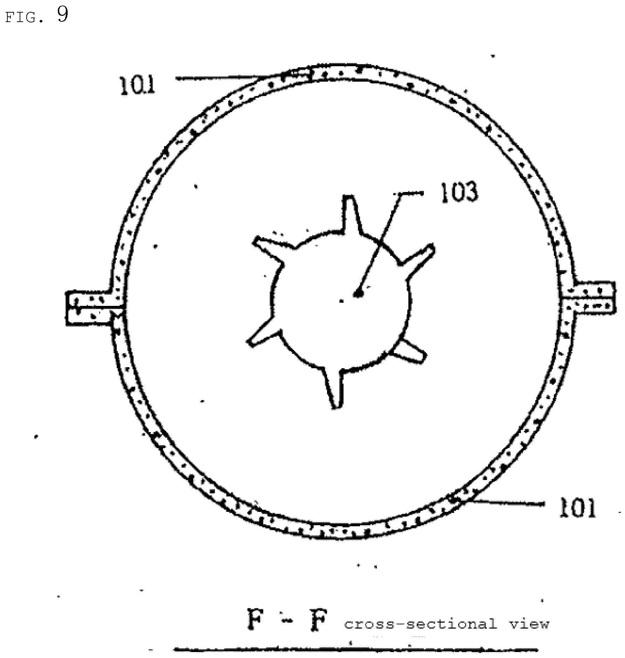

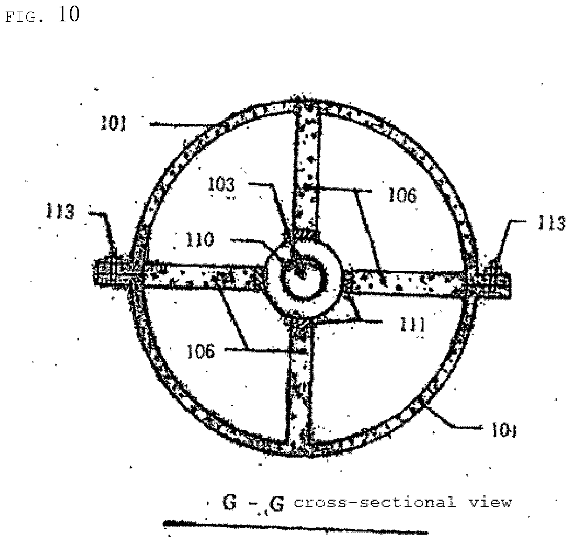

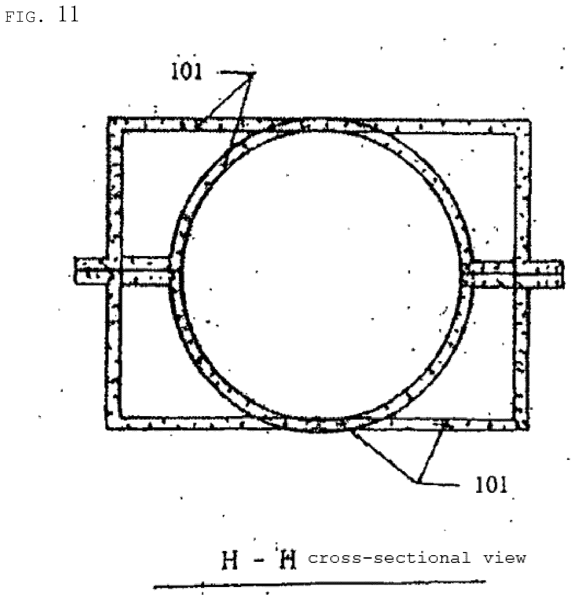

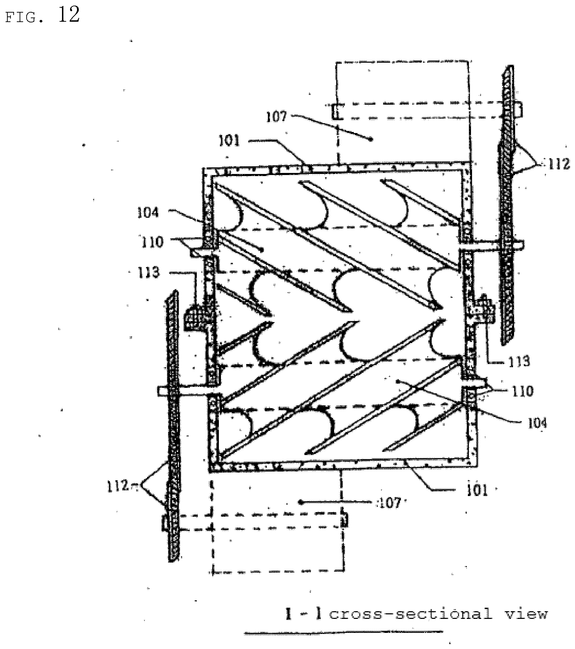

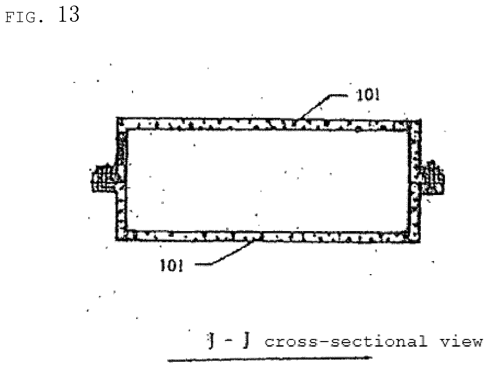

FIGS. 4 to 13 are detailed cross-sectional views of respective parts of the wind power generator.

As shown in FIG. 3, the funnel-shaped cylindrical protective cover 101 of the wind power generator of the present invention is made of aluminum or high-strength plastics.

The funnel-shaped cylindrical protective cover 101 employs the Venturi principle of converting wind from outside into a wind speed by increasing the wind force.

A honeycomb protection net 102 is installed at a front portion of the funnel-shaped cylindrical protective cover 101 to remove foreign substances (paper, plastics, straw, stones, etc.) contained in the wind sucked from the outside such that an electric fan-type spiral suction fan 103 and a spiral suction fan 104 with blades having the same height can rotate at a high speed to generate as much electricity as possible.

The electric fan-type spiral suction fan 103 is installed on an inner front surface of the funnel-shaped cylindrical protective cover 101, and the spiral suction fan 104 with blades having the same height is installed on an inner rear space of the cover spaced apart from the electric fan-type spiral suction fan 103 by a distance (20 cm to 30 cm) to generate a larger amount of electricity using the sucked wind again and to ensure that the wind can safely move to a destination even if any one of the electric fan-type spiral suction fan 103 and the spiral suction fan 104 with blades having the same height breaks down.

The electric fan-type spiral suction fan 103 includes electric fan-type spiral suction blades in order to smoothly suction wind from the outside using the funnel-shaped cylindrical protective cover 101. The electric fan-type spiral suction blades have a height gradually lowered from the suction side to the discharge side, and the part for suctioning the wind is configured by blades which are slightly concave and bent in a spiral shape, which is intended to suction a large amount of wind without resistance and rotate at a high speed to generate a large amount of electricity in connection with the generator 107.

The spiral suction fan 104 with blades having the same height is horizontally installed to allow the wind passing through the electric fan-type spiral suction fan 103 to pass by the side thereof. The part for suctioning the wind is configured by blades which are slightly concave and bent in a spiral shape, which is intended to allow the spiral suction fans with blades having the same height to rotate in opposite directions at a high speed to generate a large amount of electricity in connection with the generator 107.

The bevel bobbin 108 of the electric fan-type spiral suction fan 103 is connected to the generator 107 using a bevel belt 109 to reduce frictional force during rotation thereof.

The spiral suction fans 104 with blades having the same height are connected to the generator 107 using bevel gears 112 to reduce frictional force during rotation thereof.

The electricity generated by the generator 107 is first stored in the storage battery 200 and is then used to drive the vehicle in connection with the electric drive motor 300.

## Claims

1. An electric vehicle equipped with a wind power generator (100), the wind power generator (100) being arranged at a position of an internal combustion engine of a conventional vehicle hood,
wherein the wind power generator (100) comprises:
a funnel-shaped cylindrical protective cover (101) made from aluminum or high-strength plastics, and configured to increase weak winds introduced from the outside and to convert the same into wind speed by applying the Venturi principle;
a honeycomb protection net (102) installed at a front portion of the protective cover (101), and configured to remove a foreign substance etc. (paper, plastics, straw, and stones) contained in the wind introduced from the outside;
an electric fan-type spiral suction fan (103) configured to rotate at a high speed when the weak winds passing through the honeycomb protection net (102) are converted into wind speed by the funnel-shaped cylindrical protective cover (101); and
a spiral suction fan (104) having blades with the same height, spaced apart from the electric fan-type spiral suction fan (103) by a distance (20 cm to 30 cm), and configured to rotate at a high speed using the passing wind again,
wherein the honeycomb protection net (102) is installed at the front portion of the funnel-shaped cylindrical protective cover (101) to which the Venturi principle is applied,
wherein the electric fan-type spiral suction fan (103), and the spiral suction fan (104) having blades with the same height generate electricity in connection with generators (107),
wherein the generated electricity is first stored in a storage battery (200) so as to be used to drive the vehicle using an electric motor (300),
the electric vehicle comprising:
a plug (400) configured to supply remaining electricity not used for driving to a power company.

2. The electric vehicle according to claim 1, wherein the electric fan-type spiral suction fan (103) is installed at an inner front portion of the funnel-shaped cylindrical protective cover (101) to which the Venturi principle is applied, and is configured to lower the height of blades gradually from a wind suction side to a wind discharge side,
wherein a part of the electric fan-type spiral suction fan (103) for suctioning the wind comprises fans slightly concave and bent in a spiral shape.

3. The electric vehicle according to claim 1, wherein the spiral suction fan (104) having the blades with the same height is provided with a part for suctioning the wind spaced apart from the electric fan-type spiral suction fan (103) by the distance (20 cm to 30 cm) in order to use the wind that has passed through the electric fan-type spiral suction fan (103) again, the part comprising blades slightly concave and bent in a spiral shape,
wherein, when the spiral suction fan (104) is installed horizontally to laterally suction the wind, the spiral suction fan (104) rotates in opposite directions.

4. The electric vehicle according to claim 2, wherein the electric fan-type spiral suction fan (103) comprises a bevel bobbin (108) connected by a bevel belt (109) so as to rotate at a high speed even in weak winds and generate electricity by minimizing frictional force.

5. The electric vehicle according to claim 3, wherein the spiral suction fan (104) having blades with the same height is connected by a bevel gear (112) so as to rotate at a high speed even in weak winds and generate electricity by minimizing frictional force.
